# EUROPÄISCHE PATENTSCHRIFT

(11) **EP 0 544 850 B1**
(45) Veröffentlichungstag und Bekanntmachung des Hinweises auf die Patenterteilung: **07.02.1996**
(21) Anmeldenummer: 92910140.0
(22) Anmeldetag: 14.05.1992
(51) Int. Cl.: B60T 8/42, B60T 8/36

(54) **HYDRAULISCHE BREMSANLAGE MIT BLOCKIERSCHUTZREGELUNG**
HYDRAULIC BRAKE INSTALLATION WITH ANTI-LOCK CONTROL
SYSTEME HYDRAULIQUE DE FREINAGE A REGULATION ANTIBLOCAGE

(30) Priorität: 08.06.1991 DE 4118951
(43) Veröffentlichungstag der Anmeldung: 09.06.1993
(73) Patentinhaber: ITT Automotive Europe GmbH, D-60488 Frankfurt (DE)
(72) Erfinder: MAAS, Joachim, D-6368 Bad Vilbel (DE)
(86) Internationale Anmeldenummer: EP9201065
(87) Internationale Veröffentlichungsnummer: WO9222451

(56) Entgegenhaltungen:
- EP-A- 0 303 261
- EP-A- 0 369 412
- DE-A- 2 751 150
- DE-A- 3 542 689
- DE-A- 3 644 304
- US-A- 4 940 295

## Beschreibung

Die Erfindung betrifft eine hydraulische Bremsanlage mit Blockierschutzregelung, insbesondere für Kraftfahrzeuge, nach dem Oberbegriff des Anspruchs 1.

Aus der technischen Informationsschrift der Robert Bosch GmbH "Pkw-Bremsanlagen", 1. Ausgabe, S. 17, Bild 36, ist bereits eine Bremsanlage mit den im Oberbegriff des Schutzbegehrens genannten Merkmalen bekannt. Bei dieser Bremsanlage ist eine Rückwirkung des modulierten Bremsdrucks während der Blockierschutzregelung auf das Bremspedal nicht auszuschließen, da die Hilfsdruckpumpe unmittelbar am Tandemhauptzylinder angeschlossen ist. Durch diesen schaltungstechnischen Aufbau gestattet es die vorbeschriebene Bremsanlage nicht, mit den gegebenen Mitteln eine Blockierschutzregelung ohne eine Pedalpulsation und ohne Ventilschaltgeräusche, hervorgerufen durch die digitale Steuerung des als 3/3-Wegeventilkombination ausgeführten Einlaß- und Auslaßventils durchzuführen.

Aus der DE-A-35 42 689 ist bereits eine hydraulische Bremsanlage mit Blockierschutzregelung bekannt geworden, die ein in die Hauptdruckleitung eingesetztes 3/3-Wegeventil aufweist, das entweder eine hydraulische Verbindung zwischen einem Hauptzylinder und mehreren Radbremsen herstellt, trennt oder Radbremsdruck zu einer mit einem Druckmittelspeicher gekoppelten Hilfsdruckpumpe leitet, die mit ihrer Druckseite zwischen dem 3/3-Wegeventil und den Radbremsen an die Hauptdruckleitung angeschlossen ist. In einem Bypass zum 3/3-Wegeventil befindet sich ein in Richtung des Hauptzylinders öffnendes Rückschlagventil, das zum Zwecke einer manuell gesteuerten Druckentlastung in den Radbremsen unabhängig von der Stellung des 3/3-Wegeventils den Bremsdruckabbau einzuleiten vermag.

Aus der EP-A-0 303 261 geht gleichfalls eine hydraulische Bremsanlage mit Blockierschutzregelung hervor, die nach dem Rückförderprinzip arbeitet, wozu ein der Radbremse nachgeschaltetes Auslaßventil eine Verbindung zu einem Druckmittelspeicher und einer Hilfsdruckpumpe aufweist, die während der Blockierschutzregelung im Druckmittelspeicher aufgenommenes Druckmittel zwischen einem als 2/2- oder 3/2-Wegeventil ausgeführten Einlaßventil und der Radbremse in die Hauptdruckleitung einspeist. Das als 2/2- oder 3/2-Wegeventil ausgeführte Einlaßventil befindet sich entweder als elektromagnetisch oder hydraulisch vom Differenzdruck in der Hauptdruckleitung angesteuertes Ventil schaltungstechnisch zwischen dem Hauptzylinder und der Einmündung der Druckseite der Hilfsdruckpumpe zur Radbremse angeschlossen. Zur manuell eingesteuerten Druckentlastung der Radbremse ist parallel zum Einlaßventil ein in Richtung des Hauptzylinders hydraulisch öffnendes Rückschlagventil vorgesehen.

Die DE-A-2 751 150 zeigt die Konstruktion eines 3/3-Wegeventils für eine hydraulische Bremsanlage mit Blockierschutzregelung, die als offenes Bremssystem Druckmittel mit Einleitung der Druckabbauphase (ABS-Fall) in einem Auffangbehälter sammelt, wobei keine Mittel zur Zwischenspeicherung und Rückförderung zur Druckmittelquelle des in den Auffangbehälter abgelassenen Druckmittels vorgesehen sind. Die Druckmittelquelle weist über ein in der Grundstellung geöffnetes Kugelrückschlagventil (Einlaßventil) eine Kanalführung zu einer Radbremse auf, deren Rücklaufleitung sowohl eine Kanalführung zu einem den Magnetanker aufnehmenden Magnetankerraum wie auch zu einem als Auslaßventil wirksame Kugelventil aufweist, das gleichfalls wie das den Bremsdruck zur Radbremse steuernde Einlaßventil von einem Magnetanker betätigbaren Stößel schaltbar ist, um eine am Stößelraum des Auslaßventils angeordnete Druckmittelverbindung zu einem drucklosen Auffangraum herzustellen. Die beiderseits des Magnetankers angeordneten Stößel sind im Ventilgehäuse in Dichtungen geführt, um einen funktionsbeeinträchtigenden Kurzschlußstrom im 3/3-Wegeventil zu verhindern. Die durch die vorgegebene Kanalführung notwendigen Abdichtungsmaßnahmen der Stößel wirken Reibkraft erhöhend und damit nachteilig auf die notwendige Ansteuerkraft des Magnetankers. Die schlupfgeregelte Bremsdruckmodulation ist außer Kraft, sobald nur eine der beiden Dichtungen an den Stößeln einen Defekt aufweist.

Daher ist es die Aufgabe der Erfindung, die zuvor zum Stand der Technik beschriebenen Nachteile zu vermeiden, um unter Beibehaltung einer größtmöglichen Funktionssicherheit und unter Verwendung einfachster Mittel ein kostengünstiges, geräuschminimiertes Bremssystem zu erhalten, das ohne Vornahme spezieller Maßnahmen am Hauptzylinder eine rückwirkungsfreie Bremspedalpositionierung während der Bremsdruckmodulation ermöglicht.

Diese Aufgabe wird erfindungsgemäß durch die den Patentanspruch 1 kennzeichnenden Merkmale gelöst, wonach zwischen dem Einlaß- und Auslaßventil ein von der Magnetspule umgriffener Magnetanker angeordnet ist, dessen Stirnflächen am Einlaß- oder Auslaßventil anlegbar sind, wobei in der Bremsdruckhaltephase einer Blockierschutzregelung sich der Magnetanker entgegen der Wirkung eine in Richtung des Einlaßventils wirksamen Druckfeder in einer das Einlaßventil entlastende Stellung bewegt, in der das Einlaßventil den pedalbetätigbaren Hauptzylinder von der Druckmittelverbindung zur Radbremse trennt, und wobei zur Druckabsenkung während der Blockierschutzregelung das in der Radbremse befindliche Druckmittelvolumen über die stromabwärts zur 3-Wegeventil-Kombination gelegene Hauptdruckleitung, über einen den Magnetanker aufnehmenden Magnetankerraum, über einen Stößel des Magnetankers und das vom Magnetanker geöffnete Auslaßventil zum Druckmittelspeicher gelangt.

Durch die in den Unteransprüchen aufgezeigten Maßnahmen sind zweckmäßige Ausbildungen der Erfindung angegeben, die im Zusammenhang mit weiteren Merkmalen und Vorteilen der Erfindung nachfolgend anhand einer Zeichnung näher dargestellt und erläutert werden.

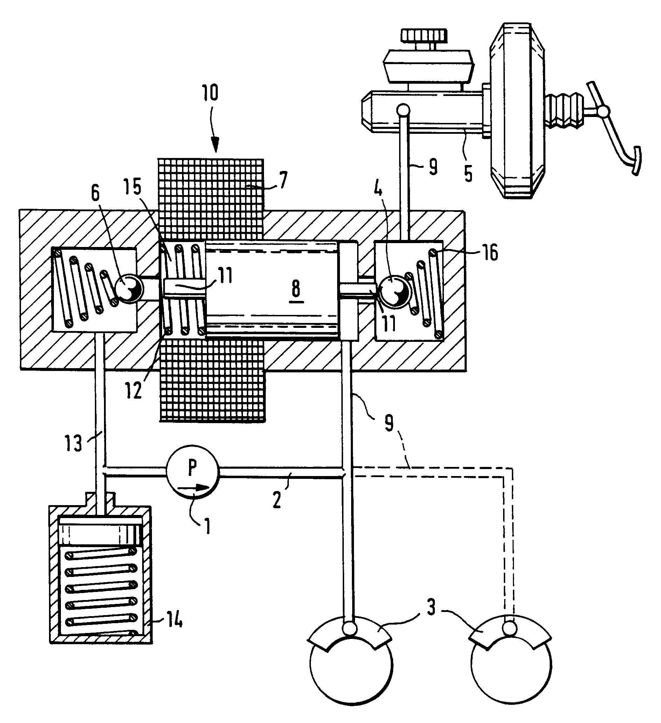

Die Figur 1 zeigt eine prinzipielle Schaltungsanordnung einer blockiergeschützten Bremsanlage mit den im Oberbegriff des Anmeldungsgegenstandes angegebenen Merkmalen, sowie eine zweckmäßige bauliche Ausgestaltung der Ventilanordnung im Längsschnitt skizziert.

Eine Hauptdruckleitung 9 verbindet einen Hauptzylinder 5 mit wenigstens einer Radbremse 3, solange ein in die Hauptdruckleitung 9 eingesetztes und als Rückschlagventil ausgeführtes Einlaßventil 4 in seiner auf Druckmitteldurchlaß geschalteten Grundstellung verharrt. Die Grundstellung des Einlaßventils 4 bestimmt ein zunächst stromlos geschalteter Elektromagnet 10, dessen Magnetanker 8 zu beiden Stirnseiten jeweils mit einem Stößel 11 versehen ist und der in Richtung des als Kugelsitzventil ausgebildeten Einlaßventils 4 von einer Druckfeder 12 grundpositioniert ist. Der abbildungsgemäße rechte Stößel 11 hält somit das Einlaßventil 4 gegen die Wirkung einer am Einlaßventil anliegenden Pegelfeder 16 geöffnet. Diametral zum Einlaßventil 4 gelegen, befindet sich zur linken Seite des Magnetankers 8 das in der abbildungsgemäßen Bremslösestellung geschlossene Auslaßventil 6. Das Auslaßventil 6 ist als in Richtung des Magnetankers 8 sperrend wirkendes Kugelrückschlagventil ausgebildet. In Öffnungsrichtung des Auslaßventils 6 schließt sich an der Saugseite einer Hilfsdruckpumpe 1 eine Rückförderleitung 13 an, die in einem Abzweig einen Druckmittelspeicher 14 aufnimmt. Eine an der Druckseite der Hilfsdruckpumpe 1 angeordnete Hilfsdruckleitung 2 mündet in die stromabwärts zum Einlaßventil 4 gelegene Hauptdruckleitung 9, die unmittelbar zur Radbremse 3 führt.

### Funktionsweise

In der abbildungsgemäßen Bremslöse- oder fußkraftaktivierten Normalbremsstellung hält die Druckfeder 12 den Magnetanker 8 in der das Einlaßventil 4 mechanisch öffnenden Position, so daß eine ungehinderte Druckmittelverbindung zwischen dem Hauptzylinder 5 und der Radbremse 3 gewährleistet ist. Damit ist einerseits in der Bremslösestellung eine Druckmittelkompensation zum am Hauptzylinder 5 angebrachten Bremsflüssigkeitsausgleichsbehälter möglich, andererseits kann bei Bedarf jederzeit fußkraftproportionaler Bremsdruck in der Radbremse 3 aufgebaut werden.

Beim Überschreiten des Kraftschlusses zwischen Fahrbahn und Fahrzeugrad setzt in Abhängigkeit der Schlupfschwelle die Blockierschutzregelung ein. Folglich wird zum Zwecke des Ausfilterns von Störgrößen der Bremsdruck über eine in der Zeichnung nicht dargestellte Bremsschlupfsteuer- und Regelelektronik zunächst konstant gehalten, wozu die Hilfsdruckpumpe 1 und die Magnetspule 7 erregt werden. Der Magnetanker 8 bewegt sich entgegen der Wirkung der Druckfeder 12 in eine das Einlaßventil 4 entlastende Stellung. Damit kann das Einlaßventil 4 den pedalbetätigten Hauptzylinder 5 von der angeschlossenen Radbremse 3 trennen. Gleichzeitig kann trotz aktivierter Hilfsdruckpumpe 1 kein Druckaufbau in der Radbremse 3 erfolgen, da infolge des geschlossenen Auslaßventils 6 und infolge des entspannten Druckspeichers 14 der Hilfsdruckpumpe 1 kein Fördervolumen zur Verfügung steht. Folglich bleibt das Druckverhältnis in der Radbremse 3 zunächst konstant.

Zur Einleitung der Druckabbauphase im überbremsten Fahrzeugrad erfolgt eine weitere, kontinuierliche Stromänderung in der Magnetspule 7, um den Magnetanker 8 gegen die Wirkung der Druckfeder 12 noch etwas weiter nach links zu bewegen. Während das Einlaßventil 4, infolge der Kegelfeder 16 und unter der Einwirkung des fußkraftproportionalen Drucks, den Hauptzylinder 5 weiterhin von der Radbremse 3 getrennt hält, gelangt der linke Stößel 11 des Magnetankers 8 an das Auslaßventil 6 und öffnet dieses. Damit strömt das zum Zwecke der Druckabsenkung in der Radbremse 3 befindliche Druckmittelvolumen über die stromabwärts zur 3-Wegeventilkombination gelegene Hauptdruckleitung 9, über den Magnetankerraum 15 und über das geöffnete Auslaßventil 6 zum Druckmittelspeicher 14. Der Druckmittelspeicher 14 wird zwangsläufig um das Druckmittelvolumen der notwendigen Druckentlastung in der Radbremse 3 vorgespannt, das dem unkritischen, d.h. dem fahrstabilen Bremseneingriff entspricht. Da während der gesamten Bremsdruckhalte- und Bremsdruckabbauphase das Einlaßventil 4 in der Funktion eines Trennventils geschlossen bleibt, verharrt das Bremspedal bewegungslos in der zum Beginn der Bremsdruckregelung befindlichen Stellung, so daß die vielmals irritierend empfundenen Pedalpulsationen unterbleiben.

Soll nach Stabilisierung des Raddrehverhaltens wieder Bremsdruck aufgebaut werden, so wird durch Abschwächung des Ankerstroms der Magnetanker 8 unter Einwirkung der Druckfeder 12 wieder kontinuierlich so weit nach rechts verschoben, bis sowohl das Auslaßventil 6 wie auch noch das Einlaßventil 4 druckmitteldicht verschlossen sind. Damit kann mittels der Hilfsdruckpumpe 1 der Druck in der Radbremse 3 wiederum um das vorgespannte Druckmittelvolumen des Druckmittelspeichers 14 vergrößert werden.

Da die Bremsdruckmodulation durch eine analoge anstatt durch eine digitale Regelung der Magnetstromstärke erfolgt, lassen sich definierte, geräuschmindernde Ventilöffnungs- bzw. Ventilschließgeschwindigkeiten erzielen, die u.a. die Voraussetzung für eine individuelle Regelung der gewünschten Druckaufbau- und Druckabbaugradienten bildet.

Die abbildungsgemäße Bremsanlage zeigt zur klaren Veranschaulichung der Funktionsweise lediglich einen Bremsdruckregelkreis. Die Erweiterung auf 2- und Mehrkreisbremsanlagen, beispielsweise in Vorderachs- und Hinterachsbremskreisaufteilung oder in Diagonalaufteilung ist gegenüber dem Ausführungsbeispiel vom Grundaufbau her identisch, wobei jedem Regelkreis ein eigenes elektromagnetisch gesteuertes 3-Wegeventil in Verbindung mit der erfindungsgemäßen Schaltungsanordnung zuzuordnen ist.

### Bezugszeichenliste

- 1: Hilfsdruckpumpe
- 2: Hilfsdruckleitung
- 3: Radbremse
- 4: Einlaßventil
- 5: Hauptzylinder
- 6: Auslaßventil
- 7: Magnetspule
- 8: Magnetanker
- 9: Hauptdruckleitung
- 10: Elektromagnet
- 11: Stößel
- 12: Druckfeder
- 13: Rückförderleitung
- 14: Druckmittelspeicher
- 15: Magnetankerraum
- 16: Kegelfeder

## Patentansprüche

1. Hydraulische Bremsanlage mit Blockierschutzregelung, insbesondere für Kraftfahrzeuge, mit einer von einem Hauptzylinder (5) zu mindestens einer Radbremse (3) führenden Hauptdruckleitung (9), in die eine 3-Wegeventil-Kombination eingefügt ist, mit einem in der Grundstellung offenen Einlaßventil (4) und mit einem in der Grundstellung geschlossenen Auslaßventil (6), an dem eine Druckmittelrückförderleitung (13) angeschlossen ist, wobei an der Druckmittelrückförderleitung (13) ein Druckmittelspeicher (14) und dem Druckmittelspeicher (14) nachgeschaltet eine Hilfsdruckpumpe (1) angeschlossen ist, die Druckmittel dem Druckmittelspeicher (14) entnimmt und dieses über eine Hilfsdruckleitung (2) der Radbremse (3) zuführt, sowie mit wenigstens einem Sensor zum Erfassen der Winkelgeschwindigkeit des abzubremsenden Rades und mit einer elektronischen Auswerteeinheit, die die Sensorsignale auswertet und Schaltsignale für den Pumpenantrieb und die Ventile erzeugt, wobei die an der Druckseite der Hilfsdruckpumpe (1) angeschlossene Hilfsdruckleitung (2) eine permanente, direkte hydraulische Verbindung zur Radbremse (3) aufweist und wobei die Druckseite der Hilfsdruckpumpe (1) durch das Einlaßventil (4) vom Hauptzylinder (5) absperrbar ist, dadurch **gekennzeichnet,** daß zwischen dem Einlaß- und Auslaßventil (4,6) ein von der Magnetspule (7) umgriffener Magnetanker (8) angeordnet ist, dessen Stirnflächen am Einlaß- oder Auslaßventil (4,6) anlegbar sind, daß sich in der Bremsdruckhaltephase einer Blockierschutzregelung der Magnetanker (8) entgegen der Wirkung einer in Richtung des Einlaßventils (4) wirksamen Druckfeder (12) in eine das Einlaßventil (4) entlastende Stellung bewegt, in der das Einlaßventil (4) den pedalbetätigbaren Hauptzylinder (5) von der Druckmittelverbindung zur Radbremse (3) trennt, und daß zur Druckabsenkung während der Blockierschutzregelung das in der Radbremse (3) befindliche Druckmittelvolumen über die stromabwärts zur 3-Wegeventil-Kombination gelegene Hauptdruckleitung (9), über einen den Magnetanker (8) aufnehmenden Magnetankerraum (15), über einen Stößel (11) des Magnetankers (8) und das vom Magnetanker (8) geöffnete Auslaßventil (6) zum Druckmittelspeicher (14) gelangt.

2. Hydraulische Bremsanlage mit Blockierschutzregelung nach Anspruch 1, dadurch **gekennzeichnet,** daß die Schaltstellung des Einlaß- und Auslaßventils (4,6) stufenlos variabel über eine elektrische Stromänderung innerhalb einer Magnetspule (7) erfolgt.

3. Hydraulische Bremsanlage mit Blockierschutzregelung nach Anspruch 1 oder 2, dadurch **gekennzeichnet,** daß das Einlaß- und Auslaßventil (4,6) aus jeweils einem baulich sowie wirkungsmäßig hintereinandergeschalteten Kugelsitzventil gebildet ist.

4. Hydraulische Bremsanlage nach mindestens einem der vorhergehenden Ansprüche 1 bis 3, dadurch **gekennzeichnet,** daß das Einlaßventil (4) als in Richtung der Radbremse (3) und in Richtung der Hilfsdruckleitung (2) sperrend wirkendes und das Auslaßventil (6) als in Richtung der Rückförderleitung (13) öffnendes Rückschlagventil ausgebildet sind.

## Claims

1. A hydraulic brake system with anti-lock control, in particular for automotive vehicles, comprising a main pressure line (9) which leads from a master cylinder (5) to at least one wheel brake (3) and into which a three-way valve combination is inserted that includes a normally open inlet valve (4) and an outlet valve (6) closed in its normal position, to which a pressure fluid return delivery line (13) is connected, a pressure fluid accumulator (14) being connected to the pressure fluid return delivery line (13), and an auxiliary pressure pump (1) being connected downstream of the pressure fluid accumulator (14) and taking pressure fluid from the pressure fluid accumulator (14) and delivering it via an auxiliary pressure line (2) to the wheel brake (3), and comprising at least one sensor for determining the angular velocity of the wheel to be braked, and an electronic assessing unit assessing the sensor signals and generating switch signals for the pump drive and the valves, wherein the auxiliary pressure line (2) connected to the pressure side of the auxiliary pressure pump (1) constitutes a permanent direct hydraulic connection to the wheel brake (3), while the pressure side of the auxiliary pressure pump (1) is adapted to be shut off in relation to the master cylinder (5) by the inlet valve (4),
**characterized** in that a magnet armature (8) encompassed by the magnet coil (7) is arranged between the inlet and outlet valves (4, 6) and has its end surfaces movable into abutment on the inlet or outlet valves (4, 6), and in that in the phase of anti-lock control in which braking pressure is maintained constant, the magnet armature (8), in opposition to the effect of a compression spring (12) acting in the direction of the inlet valve (4), moves into a position relieving the inlet valve (4), in which position the inlet valve (4) isolates the pedal-operable master cylinder (5) from the pressure fluid connection to the wheel brake (3), and in that for pressure reduction during anti-lock control, the pressure fluid volume contained in the wheel brake (3) propagates to the pressure fluid accumulator (14) through the main pressure line (9) disposed downstream of the three-way valve combination, a magnet armature chamber (15) housing the magnet armature (8), a tappet (11) of the magnet armature (8) and the outlet valve (6) opened by the magnet armature (8).

2. A hydraulic brake system with anti-lock control as claimed in claim 1,
**characterized** in that the inlet and outlet valves (4, 6) have an infinitely variable switch position by way of an electric current variation within a magnet coil (7).

3. A hydraulic brake system with anti-lock control as claimed in claim 1 or 2,
**characterized** in that the inlet and outlet valves (4, 6) include spherical seat valves connected one after the other in terms of structure and effect.

4. A hydraulic brake system as claimed in at least one of the preceding claims 1 to 3,
**characterized** in that the inlet valve (4) is provided as a non-return valve adapted to close in the direction of the wheel brake (3) and in the direction of the auxiliary pressure line (2), and the outlet valve (6) is provided as a non-return valve opening in the direction of the return delivery line (13).

## Revendications

1. Système hydraulique de freinage à régulation antiblocage, notamment pour des véhicules automobiles, avec une conduite de pression principale (9), qui mène d'un maître-cylindre (5) à au moins un frein de roue (3) et dans laquelle est intercalée une combinaison de soupapes à 3 voies, avec une soupape d'admission (4) ouverte dans la position de base et avec une soupape d'échappement (6), fermée dans la position de base et à laquelle est raccordée une conduite (13) de refoulement de fluide de pression, un réservoir (14) de fluide sous pression et une pompe de pression auxiliaire (1) montée à la suite du réservoir (14) étant raccordés à la conduite de refoulement (13), la pompe de pression auxiliaire (1) prélevant du fluide sous pression du réservoir (14) de fluide de pression et l'amenant par l'intermédiaire d'une conduite de pression auxiliaire (2) au frein de roue (3), ce système comportant également un capteur pour enregistrer la vitesse angulaire de la roue à freiner et avec une unité électronique d'interprétation, qui interprète les signaux du capteur et produit des signaux de commutation pour l'entraînement de la pompe et pour les soupapes, la conduite de pression auxiliaire (2), raccordée au côté de pression de la pompe de pression auxiliaire (1), présentant une liaison hydraulique permanente directe vers le frein de roue (3) et le côté de pression de la pompe de pression auxiliaire (1) pouvant être isolé du maître-cylindre (5) par la soupape d'admission (4), **caractérisé** en ce qu'une armature d'aimant (8) entourée par la bobine d'excitation (7) est disposée entre la soupape d'admission (4) et la soupape d'échappement (6), armature dont les faces frontales peuvent être respectivement appliquées contre la soupape d'admission ou d'échappement (4, 6), en ce que, pendant la phase de maintien de la pression de freinage d'une régulation antiblocage, l'armature d'aimant (8) se déplace, à l'encontre de l'action d'un ressort de compression (12) actif en direction de la soupape d'admission (4), dans une position libérant la soupape d'admission (4), position dans laquelle la soupape d'admission (4) isole le maître-cylindre (5), pouvant être actionné par pédale, de la liaison de fluide de pression vers le frein de roue (3), et en ce qu'afin de diminuer la pression pendant la régulation antiblocage, le volume de fluide sous pression qui se trouve dans le frein de roue (3) est envoyé dans le réservoir (14) de fluide sous pression par l'intermédiaire de la conduite de pression principale (9) située en aval de la combinaison de soupapes à 3 voies, puis d'une chambre d'armature (15) recevant l'armature d'aimant (8), d'un poussoir (11) de l'armature d'aimant (8) et de la soupape d'échappement (6) ouverte par l'nature d'aimant (8).

2. Système hydraulique de freinage à régulation antiblocage selon la revendication 1, **caractérisé** en ce que la position de commutation des soupapes d'admission et d'évacuation (4, 6) peut être variée en continu au moyen d'une modification du courant électrique à l'intérieur d'une bobine d'excitation (7).

3. Système hydraulique de freinage à régulation antiblocage selon la revendication 1 ou 2, **caractérisé** en ce que les soupapes d'admission et d'échappement (4, 6) sont constituées par des soupapes à billes respectives montées constructivement et fonctionnellement en série.

4. Système hydraulique de freinage selon au moins une des revendications précédentes 1 à 3, **caractérisé** en ce que la soupape d'admission (4) est réalisée sous la forme d'un clapet antiretour exerçant une action d'isolement en direction du frein de roue (3) et en direction de la conduite de pression auxiliaire (2),et la soupape d'échappement (6) est réalisée sous la forme d'un clapet antiretour s'ouvrant en direction de la conduite de refoulement (13).
